# EUROPEAN PATENT SPECIFICATION

(11) **EP 2 834 491 B1**
(45) Date of publication and mention of the grant of the patent: **11.01.2017**
(21) Application number: 13772191.6
(22) Date of filing: 25.03.2013
(51) Int. Cl.: F01P 7/16, F16K 31/68

(54) **THERMOSTAT DEVICE AND COOLING SYSTEM**
THERMOSTATVORRICHTUNG UND KÜHLSYSTEM
DISPOSITIF THERMOSTATIQUE ET SYSTÈME DE REFROIDISSEMENT

(30) Priority: 05.04.2012 SE 1250351
(43) Date of publication of application: 11.02.2015
(73) Proprietor: Scania CV AB, 151 87 Södertälje (SE)
(72) Inventor: UHMAN, Fredrik, S-141 91 Huddinge (SE)
(74) Representative: Scania CV AB
(86) International application number: PCT/SE2013/050326
(87) International publication number: WO 2013/151486

(56) References cited:
- EP-A1- 2 132 468
- EP-A2- 2 037 097
- EP-A2- 2 037 097
- WO-A1-2011/005553
- JP-U- H 025 672
- US-A- 1 373 634
- US-A- 3 554 440
- US-A- 3 554 440
- US-A1- 2006 016 900

## Description

### TECHNICAL FIELD OF THE INVENTION AND PRIOR ART

The present invention concerns a thermostat device according to the preamble to claim 1 and a cooling system according to the preamble to claim 7.

A thermostat device comprising a temperature-dependent activating element with a wax body is often used to regulate the temperature of the cooling fluid in the cooling system that cools the combustion engine in a motor vehicle. The thermostat device conducts, in dependence upon the temperature of the cooling fluid, the cooling fluid flowing out from the combustion engine either to a radiator to be cooled before the cooling fluid is returned to the combustion engine or directly back to the combustion engine without passing through the radiator. In many motor vehicles the thermostat device is coupled into the cooling circuit of the cooling system between the cooling fluid outlet of the combustion engine and the cooling fluid inlet of the radiator. It has been shown to be advantageous to control the thermostat device in dependence upon the temperature of the cooling fluid that is conducted into the combustion engine instead of controlling the thermostat device in dependence upon the temperature of the cooling fluid that leaves the combustion engine. To enable such control without having to change the placement of the thermostat device in the cooling circuit, thermostat devices have been developed that are arranged so as to receive a controlling cooling fluid flow from a pilot line that diverts a part of the cooling fluid that is flowing toward the cooling fluid inlet of the combustion engine. Thermostat devices of the latter type are previously known from EP 2 037 097 A2 and EP 2 366 878 A2.

### OBJECT OF THE INVENTION

The object of the present invention is to provide a thermostat device of the type specified above with a new and advantageous design.

### SUMMARY OF THE INVENTION

Said object is achieved according to the present invention by means of a thermostat device exhibiting the features defined in claim 1.

The thermostat device according to the invention comprises:
- an inlet duct intended for receiving cooling fluid that is circulated through a combustion engine in a motor vehicle,
- an inlet opening intended for receiving cooling fluid from a pilot line,
- a first outlet duct, which is connected to said inlet duct and from which cooling fluid is intended to be conducted to a radiator,
- a second outlet duct, which is connected to said inlet duct and from which cooling fluid is intended to be returned to the combustion engine without passing through said radiator,
- a valve body, which is displaceable between various positions for regulating the flow of cooling fluid from said inlet duct to said outlet ducts,
- a temperature-dependent activating element, and
- an axially displaceable valve rod, on which the valve body is secured, wherein the activating element is arranged so as to influence the displacement position of the valve rod and the valve body in dependence upon the temperature of the cooling fluid that is received via said inlet opening, and wherein said inlet opening is connected to the second outlet duct via a connecting duct that extends in an axial direction through the valve rod.

The valve rod is thus used in the thermostat device according to the invention to conduct the cooling fluid that is received from the pilot line to the second outlet duct. As a result, the thermostat device can be given a particularly compact and space-efficient design.

According to the invention, the valve rod extents through a wax body incorporated in the activating element in order to enable the transfer of heat to the wax body from cooling fluid that flows through said connecting duct inside the valve rod. Heating the wax body from within in this manner enables more efficient through-heating of the wax body under the action of the heat from the cooling fluid that flows through the connecting duct inside the valve rod compared to a thermostat device of the conventional type in which the wax body is heated from without.

A embodiment of the invention is characterized in that:
- the thermostat device comprises a piston chamber and a displaceable piston that is received in the piston chamber, whereupon the valve rod extends through said piston chamber,
- said piston is fixedly connected to and disposed on the outside of the valve rod, and
- the wax body is housed in the piston chamber and arranged so as to act upon said piston.
It thereby becomes possible to convert the expansion of the wax body into an axial displacement of the valve rod and the valve body in an effective and space-efficient manner.

Other advantageous features of the thermostat device according to the invention are described in the non-independent claims and the description that follows below.

The invention also concerns a cooling system exhibiting the features defined in claim 7.

### BRIEF DESCRIPTION OF THE DRAWINGS

The invention will be described below with the help of exemplary embodiments, and with reference to the attached drawings. The following are depicted:
- Fig. 1: a side view of a thermostat device according to a first embodiment of the present invention,
- Fig. 2: a front view of the thermostat device according to Fig. 1,
- Fig. 3: a section along the line III-III in Fig. 2,
- Fig. 4: a section through a thermostat device according to a second embodiment of the invention, and
- Fig. 5: a schematic diagram of a cooling system comprising a thermostat device according to the invention.

### DETAILED DESCRIPTION OF EMBODIMENTS OF THE INVENTION

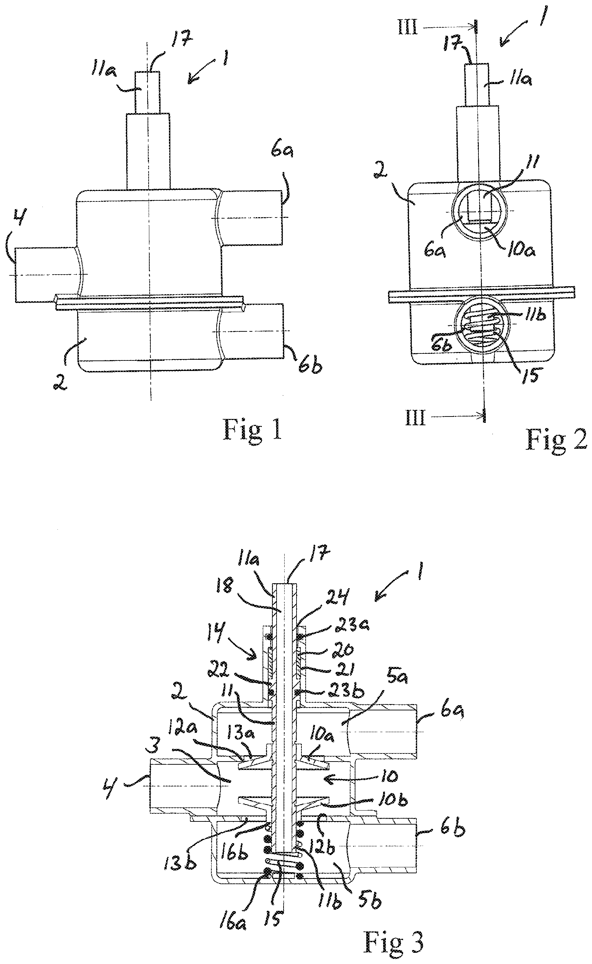

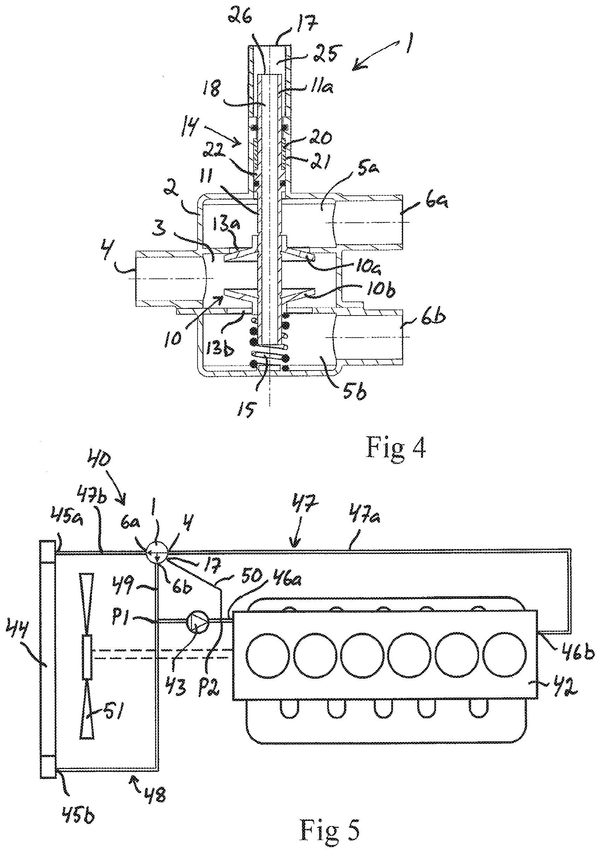

Figs. 1-3 illustrate a thermostat device 1 according to an embodiment of the present invention. This thermostat device 1 is intended to be incorporated in a cooling system in a motor vehicle, for example a cooling system 40 of the type illustrated in Fig. 5. The thermostat device 1 comprises a thermostat housing 2. An inlet duct 3 for receiving cooling fluid that is circulated through a combustion engine in the motor vehicle is arranged in the thermostat housing 2. This inlet duct 3 is intended to be connected to a line in said cooling system so to be able, via an inlet opening 4 arranged in the thermostat housing 2, to receive cooling fluid from said line. A first outlet duct 5a and a second outlet duct 5b are further arranged in the thermostat housing 2. Both of these outlet ducts 5a, 5b are connected to the inlet duct 3. Cooling fluid from the first outlet duct 5a is intended to be conducted from the thermostat device 1 to a radiator in said cooling system, while cooling fluid from the second outlet duct 5b is intended to be returned to the combustion engine without passing through said radiator. The first outlet duct 5a is intended to be connected to a line in said cooling system in order to make it possible, via a first outlet opening 6a arranged in the thermostat housing 2, to pass cooling fluid to said line, while the second outlet duct 5b is intended to be connected to a second line in said cooling system in order to make it possible, via a second outlet opening 6b arranged in the thermostat housing 2, to pass cooling fluid to said latter line.

A valve body 10 is displaceably arranged in the thermostat housing 2. This valve body 10 is axially displaceable between various positions for regulating the flow of cooling fluid from said inlet duct 3 to said outlet ducts 5a, 5b. The valve body 10 is secured on and displaceable together with an axially displaceable valve rod 11, which is displaceably disposed in the thermostat housing 2. A first valve seat 12a is arranged in the thermostat housing 2 between the inlet duct 3 and the first outlet duct 5a, and a second valve seat 12b is arranged in the thermostat housing 2 between the inlet duct 3 and the second outlet duct 5b. In the illustrated example, the first valve seat 12 is formed by an edge that extends around a first opening 13a that constitutes a flow passage between the inlet duct 3 and the first outlet duct 5a, while the second valve seat 12b is formed by an edge that extends around a second opening 13b that constitutes a flow passage between the inlet duct 3 and the second outlet duct 5b. The valve body 10 comprises a first valve member 10a which, in a first end position of the valve body, is receivable in the first valve seat 12a in order to close said first opening 13a and thereby prevent cooling fluid from flowing from the inlet duct 3 to the first outlet duct 5a. The valve body 10 further comprises a second valve member 10b which, in a second end position of the valve body, is receivable in the second valve seat 12b in order to close said second opening 13b and thereby prevent cooling fluid from flowing from the inlet duct 3 to the second outlet duct 5b. The two valve members 10a, 10b are arranged at a distance from one another viewed in the axial direction of the valve rod. When the first valve member 10a is located in its closed position in engagement with the first valve seat 12a, the second valve member 10b is located in an open position at a distance from the second valve seat 12b, as is illustrated in Fig. 3, whereupon cooling fluid is thereby allowed to flow from the inlet duct 3 to the second outlet duct 5b via said second opening 13b. When the second valve member 10b is located in its closed position in engagement with the second valve seat 12b, the first valve member 10a is located in an open position at a distance from the first valve seat 12a, whereupon cooling fluid is thereby allowed to flow from the inlet duct 3 to the first outlet duct 5a via said first opening 13a. When the valve body 10 is located in a position between said end positions, cooling fluid is allowed to flow from the inlet duct 3 in varying degree to both the first outlet duct 5a via said first opening 13a and the second outlet duct 5b via said second opening 13b. The valve rod 11 extends through the centers of respective valve members 10a, 10b. In the illustrated example, respective valve members 10a, 10b consist of conical valve heads.

The valve body 10 is displaceable from said first end position in the direction of said second end position under the action of an activating element 14 arranged in the thermostat housing 2, and against the action of the spring force from a spring device 15 acting on the valve body 10 or the valve rod 11. In the illustrated example the spring device 15 consists of a compression spring, one end of which bears against a support surface 16a inside the second outlet duct 5b and the other end of which bears against a support surface on the second valve member 10b. This compression spring surrounds an end 11 b of the valve rod, which end is received in the second outlet duct 5b.

The thermostat device 1 further comprises an inlet opening 17 that is intended to receive cooling fluid from a pilot line in said cooling system. The activating element 14 is arranged so as to influence the displacement position of the valve rod 11 and the valve body 10 in dependence upon the temperature of the cooling fluid that is received from the pilot line via said inlet opening 17. The inlet opening 17 is connected to the second outlet duct 5b via a connecting duct 18 that extends in an axial direction through the valve rod 11. The cooling fluid received from the pilot line is always allowed to flow further to the second outlet duct 5b via the connecting duct 18 regardless of the position of the valve rod 11 and the valve body 10.

In the illustrated example the valve rod 11 is tubular and open at both ends, whereupon the connecting duct 18 is formed by the internal space that extends axially through the valve rod between the ends of the valve rod. The valve rod 11 is advantageously made of a metal material with high heat-conducting capacity.

In the illustrated example the activating element 14 comprises a wax body 20. The valve rod 11 extends through said wax body 20 to enable a transfer of heat to the wax body 20 from cooling fluid that flows through the connecting duct 18 inside the valve rod 11. A piston chamber 21 is arranged in the thermostat housing 2 and a piston 22 is displaceably received in said piston chamber. The valve rod 11 extends through the piston chamber 21, and the piston 22 is fixedly connected with and disposed on the exterior of the valve rod 11. The wax body 20 is housed in the piston chamber 21 and arranged so as to act upon a piston 22. When the cooling fluid that flows through the connecting duct 18 has a temperature that is below the melting temperature of the wax substance in the wax body 20, the wax body is in a solid state and the valve body 10 is then located in the first end position illustrated in Fig. 3. When the wax body 20 is, under the action of heat from cooling fluid that flows through the connecting duct 18, heated to said melting temperature, the wax body will begin to melt. As the wax body 20 melts it increases in volume and thus exerts compressive force on the piston 22, so that said piston is displaced together with the valve rod 11 and the valve body 10 against the action of the spring device 15. The valve body 10 is thus displaced from the aforesaid first end position in the direction of the aforesaid second end position. When essentially the entire wax body 20 has melted, the valve body 10 reaches the second end position. When the wax body 20 then, due to the reduced temperature of the cooling fluid that flows through the connecting duct 18, has cooled to a temperature below said melting temperature, the wax body begins to stiffen. As the wax body 20 stiffens it decreases in volume, whereupon the piston 22 together with the valve rod 11 and the valve body 10 is displaced in the opposite direction under the action of the spring device 15.

In the illustrated example, sealing members 23a, 23b in the form of O-rings are arranged between the valve rod 11 and the thermostat housing 2 on either side of the piston chamber 21.

In the embodiment illustrated in Figs. 1-3, the inlet opening 17 in the thermostat device 1 that is intended for connection to the pilot line is arranged in one end 11 a of the valve rod that projects from the thermostat housing 2 through an opening 24 therein. The pilot line is in this case intended to be connected directly to said projecting end 11 a of the valve rod, and the relevant inlet opening 17 in this case also constitutes an inlet opening in the connecting duct 18. Fig. 4 illustrates an alternative embodiment in which the inlet opening 17 in the thermostat device 1 that is intended for connection to the pilot line is instead arranged in the thermostat housing 2, whereupon the valve rod 11 extends, with its one end 11 a, into the inlet duct 25 that is arranged in the thermostat housing 2 and connected to said inlet opening 17. The pilot line in the latter case is intended to be connected to the thermostat housing 2, and the connecting duct is in this case provided with an inlet opening 26 that is intended to be freestanding from the pilot line. With the exception of these differences in detail, the thermostat device illustrated in Fig. 4 is consistent with the thermostat device illustrated in Figs 1-3 and the thermostat device described above.

Fig. 5 schematically illustrates a cooling system 40 according to the present invention, which cooling system is intended for a motor vehicle. This cooling system 40 comprises a cooling circuit 41 for cooling a combustion engine 42 in the vehicle by means of a cooling fluid flowing in the cooling circuit, preferably in the form of water with optional freezing point-lowering additives such as, for example, glycol. A cooling fluid pump 43 is coupled into the cooling circuit 41 to circulate the cooling fluid in the cooling circuit. A radiator 44, e.g. in the form of a conventional cooling fluid radiator, is also coupled into the cooling circuit 41 to cool said cooling fluid. Said radiator 44 comprises a cooling fluid inlet 45a that is connected with a cooling fluid outlet 46b in the combustion engine 42 via a first line 47 of the cooling circuit and a cooling fluid outlet 45b that is connected with a cooling fluid inlet 46a in the combustion engine 42 via a second line 48 of the cooling circuit. Said first line 47 is connected with said second line 48 via a third line 49 of the cooling circuit. Said third line 49 is connected to the second line 48 at a first point P1 and arranged so as to allow cooling fluid to be returned from the cooling fluid outlet 46b of the combustion engine to a cooling fluid inlet 46a of the combustion engine without cooling fluid passing through said radiator 44. The third line 49 thus constitutes a bypass line, via which the cooling fluid circulating in the cooling circuit 41 can bypass the radiator 44 in its passage between the cooling fluid outlet 46b and the cooling fluid inlet 46a of the combustion engine 42. The cooling fluid between the cooling fluid inlet 46a and the cooling fluid outlet 46b of the combustion engine is circulated through cooling fluid ducts inside the combustion engine while absorbing heat from the combustion engine.

The cooling fluid that flows through the radiator 44 is cooled by means of air that is blown against the radiator when the motor vehicle is in motion. The cooling system 40 can also comprise a fan 51 that is arranged so as to generate an airflow through the radiator 44. This fan 51 can be coupled to the combustion engine 42 in order to be driven thereby.

A thermostat device 1 of the type described above is coupled into the cooling circuit 41 in such a way that:
- the inlet duct 3 of the thermostat device is connected with the cooling fluid outlet 46b of the combustion engine 42 via a first line section 47a of the first line 47,
- the first outlet duct 5a of the thermostat device is connected with the cooling fluid inlet 45a of the radiator 44 via a second line section 47b of the first line 47,
- the second outlet duct 5b of the thermostat device is connected with the third line 49, and
- the inlet opening 17 of the thermostat device is connected with a pilot line 50 of the cooling circuit 40.

The pilot line 50 is connected to the second line 48 at a second point P2 located between said first point P1 and the cooling fluid inlet 46a of the combustion engine 42. A small part of the cooling fluid that is fed to the cooling fluid inlet 46a of the combustion engine is diverted to the pilot line 50 from the second line 48 and conducted by the pilot line to the thermostat device 1. In the thermostat device 1, the cooling fluid received from the pilot line 50 is brought into heat-transferring contact with the activating element 14 and then conducted back to the second line 48 via the connecting duct 18 and the second outlet duct 5b in the thermostat device 1 and the third line 49. The cooling fluid that is conducted to the thermostat device 1 via the pilot line 50 has the same temperature as the cooling fluid that is conducted into the combustion engine 42. The activating element 14 of the thermostat device thus comes to be controlled by the temperature of the cooling fluid that is conducted into the combustion engine 42.

When the temperature of the cooling fluid in the cooling circuit 41 is low, the wax body 20 remains in a solid state and the valve body 10 is kept in the aforesaid first end position, whereupon all the cooling fluid that flows from the combustion engine 42 via the first line 37 to the thermostat device 1 is returned to the combustion engine 42 via the third line 49 and the second line 48 without passing through the radiator 44. When the cooling fluid in the cooling circuit 41 has become hot enough that the wax body 20 has begun to melt, the valve body 10 will assume a position between the aforesaid first and second end positions, whereupon a certain amount of the cooling fluid that flows via the first line 47 from the combustion engine 42 to the thermostat device 1 is conducted further to the radiator 44 and cooled therein before the cooling fluid is returned via the second line 48 to the combustion engine, while a second amount of cooling fluid is returned to the combustion engine 42 via the third line 49 and the second line 48 without passing through the radiator 44. When essentially the entire wax body 20 has melted, the valve body 10 assumes the aforesaid second end position, whereupon all the cooling fluid that flows via the first line 47 from the combustion engine 42 to the thermostat device 1 is conducted further to the radiator 44 and cooled therein before the cooling fluid is returned via the second line 48 to the combustion engine 42.

The thermostat device according to the invention and the cooling system according to the invention are intended in particular to be used in a heavy motor vehicle such as a bus, a tractor or a goods vehicle.

The invention is obviously in no way limited to the embodiments described above, but rather a number of possible modifications thereof should be obvious to one skilled in the art without deviating from the basic idea of the invention as it is defined in the accompanying claims.

## Claims

1. A thermostat device for a cooling system in a motor vehicle, which thermostat device (1) comprises:
- an inlet duct (3) intended to receive cooling fluid that is circulated through a combustion engine in the motor vehicle,
- an inlet opening (17) intended to receive cooling fluid from a pilot line of said cooling system,
- a first outlet duct (5a), which is connected with said inlet duct (3) and from which cooling fluid is intended to be conducted to a radiator in said cooling system,
- a second outlet duct (5b), which is connected with said inlet duct (3) and from which cooling fluid is intended to be returned to the combustion engine without passing through said radiator,
- a valve body (10), which is displaceable between various positions for regulating the flow of cooling fluid from said inlet duct (3) to said outlet ducts (5a, 5b),
- a temperature-dependent activating element (14), and
- an axially displaceable valve rod (11) on which the valve body (10) is secured, whereupon the activating element (14) is arranged so as to influence the displacement position of the valve rod (11) and the valve body (10) in dependence upon the temperature of the cooling fluid that is received said inlet opening (17),
**characterized in that**
- said inlet opening (17) is connected with the second outlet duct (5b) via a connecting duct (18) that extends in an axial direction through the valve rod (11),
- said activating element (14) comprises a wax body (20), and
- said valve rod (11) extends through said wax body (20) in order to allow a transfer of heat to the wax body (20) from cooling fluid that flows through said connecting duct (18) inside the valve rod (11).

2. A thermostat device according to claim 1, **characterized in that**:
- the thermostat device (1) comprises a piston chamber (21) and a piston (22) that is displaceably received in the piston chamber, wherein the valve rod (11) extends through said chamber (21),
- said piston (22) is fixedly connected with and disposed on the exterior of the valve rod (11), and
- the wax body (20) is housed in the piston chamber (21) and arranged so as to act on said piston (22).

3. A thermostat device according to any of claims1 or 2, **characterized in that**:
- the thermostat device (1) comprises a first valve seat (12a) arranged between said inlet duct (3) and the first outlet duct (5a), and a second valve seat (12b) arranged between said inlet duct (3) and the second outlet duct (5b),
- the valve body (10) comprises a first valve member (10a) which, in a first end position of the valve body, is receivable in the first valve seat (12a) in order to thereby prevent cooling fluid from flowing from said inlet duct (3) to the first outlet duct (5a), and
- the valve body (10) comprises a second valve member (10b) which, in a second end position of the valve body, is receivable in the second valve seat (12b) in order to thereby prevent cooling fluid from flowing from said inlet duct (3) to the second outlet duct (5b).

4. A thermostat device according to claim 3, **characterized in that** the valve body (10) is displaceable from said first end position in the direction of said second end position under the action of the activating element (14) and against the action of the spring force of a spring device (15) on the valve body (10) or the valve rod (11).

5. A thermostat device according to any of claims 1-4, **characterized in that** the valve rod (11) is tubular and open at both ends, whereupon the connecting duct (18) is formed by an internal space in the valve rod (11) between the ends of the valve rod.

6. A thermostat device according to any of claims 1-5, **characterized in that** said inlet opening (17) is arranged in one end of the valve rod (11).

7. A cooling system for a motor vehicle comprising a cooling circuit (41) for cooling a combustion engine (42) in the vehicle by means of cooling fluid flowing in the cooling circuit, which cooling system (40) comprises:
- a cooling fluid pump (43) for circulating the cooling fluid in the cooling circuit (41), and
- a radiator (44) coupled into the cooling circuit (41) for cooling the cooling fluid, wherein said radiator (44) comprises a cooling fluid inlet (45a) that is connected with a cooling fluid outlet (46b) of the combustion engine (42) via a first line (47) in the cooling circuit, and a cooling fluid outlet (45b) that is connected with a cooling fluid inlet (46a) of the combustion engine (42) via a second line (48) in the cooling circuit, whereupon said first line (47) is connected with said second line (48) via a third line (49) in the cooling circuit, which third line (49) is connected to the second line (48) at a first point (P1) and arranged so as to allow the cooling fluid to return to the combustion engine (42) without passing through said radiator (44),
**characterized in that** a thermostat device (1) according to any of claims 1-6 is coupled into said first line (47), whereupon:
- said inlet duct (3) of the thermostat device is connected with the cooling fluid outlet (46b) of the combustion engine (42),
- said first outlet duct (5a) of the thermostat device is connected with the cooling fluid inlet (45a) of the radiator (44),
- said second outlet duct (5b) of the thermostat device is connected with said third line (49), and
- said inlet opening (17) of the thermostat device is connected with a pilot line (50) in the cooling circuit, which pilot line (50) is connected to said second line (48) at a second point (P2) located between said first point (P1) and the cooling fluid inlet (46a) of the combustion engine (42).

## Patentansprüche

1. Thermostatvorrichtung für ein Kühlsystem in einem Kraftfahrzeug, wobei die Thermostatvorrichtung (1) umfasst:
- einen Einlasskanal (3), der zum Aufnehmen von Kühlflüssigkeit vorgesehen ist, die durch einen Verbrennungsmotor in dem Kraftfahrzeug zirkuliert wird,
- eine Einlassöffnung (17), die zum Aufnehmen von Kühlflüssigkeit von einer Führungsleitung des Kühlsystems vorgesehen ist,
- einen ersten Auslasskanal (5a), der mit dem Einlasskanal (3) verbunden und von dem aus vorgesehen ist, Kühlflüssigkeit zu einem Kühler des Kühlsystems zu leiten,
- einen zweiten Auslasskanal (5b), der mit dem Einlasskanal (3) verbunden und von dem aus vorgesehen ist, Kühlflüssigkeit zu dem Verbrennungsmotor ohne Durchlaufen des Kühlers zurückzuführen,
- einen Ventilkörper (10), der zwischen verschiedenen Positionen zum Regulieren des Kühlflüssigkeitsstroms von dem Einlasskanal (3) zu den Auslasskanälen (5a, 5b) verlagerbar ist,
- ein temperaturabhängiges Aktivierungselement (14), und
- eine axial verlagerbare Ventilstange (11), auf der der Ventilkörper (10) gesichert ist, wobei das Aktivierungselement (14) derart angeordnet ist, dass es die Verlagerungsposition der Ventilstange (11) und des Ventilkörpers (10) in Abhängigkeit von der Temperatur der Kühlflüssigkeit beeinflusst, die durch die Einlassöffnung (17) aufgenommen wird,
**dadurch gekennzeichnet, dass**
- die Einlassöffnung (17) mit dem zweiten Auslasskanal (5b) über einen Verbindungskanal (18) verbunden ist, der sich in eine axiale Richtung durch die Ventilstange (11) erstreckt,
- das Aktivierungselement (14) einen Wachskörper (20) umfasst, und
- die Ventilstange (11) sich durch den Wachskörper (20) erstreckt, um eine Übertragung von Wärme zu dem Wachskörper (20) von einer Kühlflüssigkeit, die durch den Verbindungskanal (18) innerhalb der Ventilstange (11) fließt, zu erlauben.

2. Thermostatvorrichtung nach Anspruch 1, **dadurch gekennzeichnet, dass**:
- die Thermostatvorrichtung (1) einen Kolbenraum (21) und einen Kolben (22) umfasst, der verlagerbar in dem Kolbenraum empfangen wird, wobei die Ventilstange (11) sich durch den Raum (21) erstreckt,
- der Kolben (22) starr mit der Außenseite der Ventilstange (11) verbunden und auf dieser angeordnet ist,
- der Wachskörper (20) in dem Kolbenraum (21) untergebracht und derart angeordnet ist, dass dieser auf den Kolben (22) reagiert.

3. Thermostatvorrichtung nach einem der Ansprüche 1 oder 2, **dadurch gekennzeichnet, dass**:
- die Thermostatvorrichtung (1) einen ersten Ventilsitz (12a), der zwischen dem Einlasskanal (3) und dem ersten Auslasskanal (5a) angeordnet ist, und einen zweiten Ventilsitz (12b), der zwischen dem Einlasskanal (3) und dem zweiten Auslasskanal (5b) angeordnet ist, umfasst,
- der Ventilkörper (10) ein erstes Ventilelement (10a) umfasst, welches in einer ersten Endposition des Ventilkörpers in dem ersten Ventilsitz (12a) aufnehmbar ist, um dadurch zu verhindern, dass Kühlflüssigkeit aus dem Einlasskanal (3) zu dem ersten Auslasskanal (5a) fließt, und
- der Ventilkörper (10) ein zweites Ventilelement (10b) umfasst, welches in einer zweiten Endposition des Ventilkörpers in dem zweiten Ventilsitz (12b) aufnehmbar ist, um dadurch zu verhindern, dass Kühlflüssigkeit von dem Einlasskanal (3) zu dem zweiten Auslasskanal (5b) fließt.

4. Thermostatvorrichtung nach Anspruch 3, **dadurch gekennzeichnet, dass** der Ventilkörper (10) von der ersten Endposition in die Richtung der zweiten Endposition durch die Bewegung des Aktivierungselements (14) und gegen die Bewegung der Federkraft einer Federvorrichtung (15) auf dem Ventilkörper (10) oder der Ventilstange (11) verlagerbar ist.

5. Thermostatvorrichtung nach einem der Ansprüche 1 bis 4, **dadurch gekennzeichnet, dass** die Ventilstange (11) röhrenförmig und an beiden Enden offen ist, wobei der Verbindungskanal (18) durch einen Innenraum der Ventilstange (11) zwischen den Enden der Ventilstange ausgebildet ist.

6. Thermostatvorrichtung nach einem der Ansprüche 1 bis 5, **dadurch gekennzeichnet, dass** die Einlassöffnung (17) in einem Ende der Ventilstange (11) angeordnet ist.

7. Kühlsystem für ein Kraftfahrzeug, umfassend einen Kühlkreislauf (41) zum Kühlen eines Verbrennungsmotors (42) in einem Fahrzeug mittels einer in dem Kühlkreislauf fließenden Kühlflüssigkeit, wobei das Kühlsystem (40) umfasst:
- eine Kühlflüssigkeitspumpe (43) zum Zirkulieren der Kühlflüssigkeit in dem Kühlkreislauf (41), und
- einen Kühler (44), der in den Kühlkreislauf (41) zum Kühlen der Kühlflüssigkeit eingekoppelt ist, wobei der Kühler (44) einen Kühlflüssigkeitseinlass (45a), der mit einem Kühlflüssigkeitsauslass (46b) des Verbrennungsmotors (42) über eine erste Leitung (47) in dem Kühlkreislauf verbunden ist, und einen Kühlflüssigkeitsauslass (45b) umfasst, der mit einem Kühlflüssigkeitseinlass (46a) des Verbrennungsmotors (42) über eine zweite Leitung in dem Kühlkreislauf verbunden ist,
wobei die erste Leitung (47) mit der zweiten Leitung (48) über eine dritte Leitung (49) in dem Kühlkreislauf verbunden ist, wobei die dritte Leitung (49) mit der zweiten Leitung (48) an einem ersten Punkt (P1) verbunden und derart angeordnet ist, dass sie es der Kühlflüssigkeit ermöglicht, zu dem Verbrennungsmotor (42) ohne Durchlaufen des Kühlers (44) zurückgeführt zu werden,
**dadurch gekennzeichnet, dass** eine Thermostatvorrichtung (1) nach einem der Ansprüche 1 bis 6 in die erste Leitung (47) eingekoppelt ist, wobei:
- der Einlasskanal (3) der Thermostatvorrichtung mit dem Kühlflüssigkeitsauslass (46b) des Verbrennungsmotors (42) verbunden ist,
- der erste Auslasskanal (5a) der Thermostatvorrichtung mit dem Kühlflüssigkeitseinlass (45a) des Kühlers (44) verbunden ist,
- der zweite Auslasskanal (5b) der Thermostatvorrichtung mit der dritten Leitung (49) verbunden ist, und
- die Einlassöffnung (17) der Thermostatvorrichtung mit einer Führungsleitung (50) des Kühlkreislaufs verbunden ist, wobei die Führungsleitung (50) mit der zweiten Leitung (48) an einem zweiten Punkt (P2) verbunden ist, der zwischen dem ersten Punkt (P1) und dem Kühlflüssigkeitseinlass (46a) des Verbrennungsmotors (42) angeordnet ist.

## Revendications

1. Dispositif thermostatique pour un système de refroidissement dans un véhicule à moteur, lequel dispositif thermostatique (1) comprend :
- un conduit d'admission (3) destiné à recevoir un fluide de refroidissement qui circule dans un moteur à combustion du véhicule à moteur,
- une ouverture d'admission (17) destinée à recevoir un fluide de refroidissement d'une conduite pilote dudit système de refroidissement,
- un premier conduit de sortie (5a) relié audit conduit d'admission (3) et à partir duquel le fluide de refroidissement est destiné à être acheminé vers un radiateur dans ledit système de refroidissement,
- un second conduit de sortie (5b) relié audit conduit d'admission (3) et à partir duquel le fluide de refroidissement est destiné à être renvoyé au moteur à combustion sans passer par ledit radiateur,
- un corps de soupape (10) déplaçable entre diverses positions pour réguler le débit de fluide de refroidissement depuis ledit conduit d'admission (3) vers lesdits conduits de sortie (5a, 5b),
- un élément d'activation dépendant de la température (14), et
- une tige de soupape (11) axialement déplaçable, sur laquelle est fixé le corps de soupape (10), l'élément d'activation (14) étant agencé de façon à influer sur la position de déplacement de la tige de soupape (11) et du corps de soupape (10) en fonction de la température du fluide de refroidissement qui est reçu par ladite ouverture d'admission (17),
**caractérisé en ce que**
- ladite ouverture d'admission (17) est reliée au second conduit de sortie (5b) via un conduit de liaison (18) qui s'étend dans une direction axiale à travers la tige de soupape (11),
- ledit élément d'activation (14) comprend un corps de cire (20), et
- ladite tige de soupape (11) s'étend à travers ledit corps de cire (20) afin de permettre un transfert de chaleur au corps de cire (20) en provenance du fluide de refroidissement qui s'écoule à travers ledit conduit de liaison (18) à l'intérieur de la tige de soupape (11).

2. Dispositif thermostatique selon la revendication 1, **caractérisé en ce que :**
- le dispositif thermostatique (1) comprend une chambre de piston (21) et un piston (22) qui est reçu de manière déplaçable dans la chambre de piston, la tige de soupape (11) s'étendant à travers ladite chambre (21),
- ledit piston (22) est relié rigidement à et disposé sur l'extérieur de la tige de soupape (11), et
- le corps de cire (20) est logé dans la chambre de piston (21) et agencé de manière à agir sur ledit piston (22).

3. Dispositif thermostatique selon l'une quelconque des revendications 1 ou 2, **caractérisé en ce que** :
- le dispositif thermostatique (1) comprend un premier siège de soupape (12a) disposé entre ledit conduit d'admission (3) et le premier conduit de sortie (5a), et un second siège de soupape (12b) disposé entre ledit conduit d'admission (3) et le second conduit de sortie (5b),
- le corps de soupape (10) comprend un premier élément de soupape (10a) qui, dans une première position d'extrémité du corps de soupape, peut être reçu dans le premier siège de soupape (12a) afin d'empêcher le fluide de refroidissement de s'écouler dudit conduit d'admission (3) vers le premier conduit de sortie (5a), et
- le corps de soupape (10) comprend un second élément de soupape (10b) qui, dans une seconde position d'extrémité du corps de soupape, peut être reçu dans le second siège de soupape (12b) afin d'empêcher le fluide de refroidissement de s'écouler dudit conduit d'admission (3) vers le second conduit de sortie (5b).

4. Dispositif thermostatique selon la revendication 3, **caractérisé en ce que** le corps de soupape (10) est déplaçable depuis ladite première position d'extrémité en direction de ladite seconde position d'extrémité sous l'action de l'élément d'activation (14) et contre l'action de la force de ressort d'un dispositif à ressort (15) sur le corps de soupape (10) ou la tige de soupape (11).

5. Dispositif thermostatique selon l'une quelconque des revendications 1 à 4, **caractérisé en ce que** la tige de soupape (11) est tubulaire et ouverte aux deux extrémités, le conduit de liaison (18) étant formé par un espace interne dans la tige de soupape (11) entre les extrémités de la tige de soupape.

6. Dispositif thermostatique selon l'une quelconque des revendications 1 à 5, **caractérisé en ce que** ladite ouverture d'admission (17) est disposée dans une extrémité de la tige de soupape (11).

7. Système de refroidissement pour un véhicule à moteur, comprenant un circuit de refroidissement (41) pour refroidir un moteur à combustion (42) dans le véhicule à l'aide d'un fluide de refroidissement s'écoulant dans le circuit de refroidissement, lequel système de refroidissement (40) comprend :
- une pompe à fluide de refroidissement (43) destinée à faire circuler le fluide de refroidissement dans le circuit de refroidissement (41), et
- un radiateur (44) couplé au circuit de refroidissement (41) pour refroidir le fluide de refroidissement, ledit radiateur (44) comprenant une admission de fluide de refroidissement (45a) qui est reliée à une sortie de fluide de refroidissement (46b) du moteur à combustion (42) via un premier conduit (47) dans le circuit de refroidissement, et une sortie de fluide de refroidissement (45b) qui est reliée à une admission de fluide de refroidissement (46a) du moteur à combustion (42) via un second conduit (48) dans le circuit de refroidissement,
ledit premier conduit (47) étant relié audit second conduit (48) via un troisième conduit (49) dans le circuit de refroidissement, lequel troisième conduit (49) est relié au second conduit (48) en un premier point (P1) et disposé de façon à permettre le retour du fluide de refroidissement au moteur à combustion (42) sans passer par ledit radiateur (44),
**caractérisé en ce** **qu**'un dispositif thermostatique (1) selon l'une quelconque des revendications 1 à 6 est couplé au premier conduit (47) :
- ledit conduit d'admission (3) du dispositif thermostatique étant relié à la sortie de fluide de refroidissement (46b) du moteur à combustion (42),
- ledit premier conduit de sortie (5a) du dispositif thermostatique étant relié à l'admission de fluide de refroidissement (45a) du radiateur (44),
- ledit second conduit de sortie (5b) du dispositif thermostatique étant relié audit troisième conduit (49), et
- ladite ouverture d'admission (17) du dispositif thermostatique étant reliée à une conduite pilote (50) dans le circuit de refroidissement, laquelle conduite pilote (50) est reliée au second conduit (48) en un second point (P2) situé entre ledit premier point (P1) et l'admission de fluide de refroidissement (46a) du moteur à combustion (42).
